# EUROPEAN PATENT APPLICATION

(11) **EP 2 703 357 A1**
(43) Date of publication of application: **05.03.2014**
(21) Application number: 12777129.3
(22) Date of filing: 18.04.2012
(51) Int. Cl.: C01G 45/00, B01D 53/94, B01J 23/34

(54) **LAYERED COMPLEX OXIDE, OXIDATION CATALYST AND DIESEL PARTICULATE FILTER**

(30) Priority: 28.04.2011 JP 2011100714
(71) Applicant: Nissan Motor Co., Ltd, Yokohama-shi, Kanagawa 221-0023 (JP)
(72) Inventor: MASUDA, Kouji, Kanagawa 221-0023 (JP); MUNAKATA, Fumio, Setagaya-ku, Tokyo 158-8557 (JP)
(74) Representative: Hoefer & Partner
(86) International application number: PCT/JP2012/060455
(87) International publication number: WO 2012/147583

(57) **Abstract**

Provided are a layered complex oxide that can lower PM oxidation temperature and increase oxidation rate, and a nitrogen oxides reduction catalyst, a three-way catalyst, a DPF and an oxidation catalyst, each of which includes the layered complex oxide. The layered complex oxide has a layered perovskite structure and has a composition represented by the formula: (Ln_{3-X}A_{X})_{1-α}Mn₂O_{7-δ} (wherein Ln is La and/or Nd, A is Sr and/or Ca, a is degree of A-site deficiency, δ is the oxygen deficit amount, and X, δ and α satisfy 0< X< 3, 0< α< 1 and δ< 1.4), which are included in the catalysts and DPF.

## Description

### Technical Field

The present invention relates to a complex oxide having a layered perovskite structure, more particularly a layered complex oxide with A-site deficiency that is suitable for use in various catalysts and diesel particulate filters (DPFs) for reducing particulate matter (PM).

### Background Art

Complex oxide materials having a perovskite structure are represented by the general formula ABO₃, and are principally classified as cubic crystals, although they often have distorted structures that are classified as tetragonal, orthorhombic or hexagonal crystals.

Perovskite materials are known to exhibit various properties due to such distortions, and have been attracting attention, for example, as electromagnetic materials and catalytic materials.

In recent years, attempts have been made to synthesize layered perovskite complex oxides having outstanding properties by such methods as allowing various perovskite oxides to form a layered structure.

For example, some of them have been attracting attention as CO (carbon monoxide) shift catalysts or electrolyte membrane materials for FCs (fuel cells). In terms of being used as exhaust gas catalysts, some papers have been published on the degradation of nitrogen oxides (NO_{X}), although their working temperature is still far beyond the practical range.

On the other hand, regarding catalysts for PM reduction for use in internal-combustion engines (diesel engines), LaGaO₃-type perovskite materials represented by the general formula ABO₃ have been proposed (see, Patent Literature 1). This literature reported that a PM oxidation catalyst made of such a perovskite material as a support for platinum has a favorable PM oxidation temperature of 450°C.

### Citation List

### Patent Literatures

Patent Literature 1: JP 2006-341235A

### Summary of Invention

### Technical Problem

However, such LaGaO₃-type perovskite complex oxides do not have a sufficient effect for the above-described purposes. For use as a PM oxidation catalyst, in particular, it must be combined with a precious metal such as platinum, which leaves room for further improvement in terms of cost and the like.

The present invention aims at solving the above-described problems with conventional perovskite complex oxides, and an object thereof is to provide a layered complex oxide that can lower PM oxidation temperature and improve the oxidation rate without the aid of a precious metal such as platinum (Pt), and also to provide an oxidation catalyst, a DPF, a three-way catalyst and a nitrogen oxides reduction catalyst, each of which includes the layered complex oxide.

### Solution to Problem

As a result of the inventors' diligent research toward accomplishing these objects, it was found that imparting A-site deficiency to a Ruddlesden-Popper-type layered perovskite represented by the general formula A₃B₂O₇ enables the accomplishment of the objects. The present invention was thus completed.

That is, according to the above-described knowledge, the layered complex oxide of the present invention has an A-site deficient layered perovskite structure and has a composition represented by the following formula (1):

(Ln_{3-X}A_{X})_{1-α}Mn₂O_{7-δ} (1)

wherein Ln is La and/or Nd, A is Sr and/or Ca, α is the degree of A-site deficiency, and δ is the degree of oxygen deficiency.

Further, the present invention is an oxidation catalyst containing the above-described layered complex oxide of the present invention.

Further, the diesel particulate filter of the present invention is intended to remove particulate matter, and includes: the above-described oxidation catalyst of the present invention; and a monolithic support coated with the oxidation catalyst.

Furthermore, the three-way catalyst or the nitrogen oxides reduction catalyst of the present invention contains the above-described layered complex oxide of the present invention.

### Advantageous Effects of Invention

According to the present invention, the layered perovskite has a partial A-site deficiency, i.e. the composition of the layered complex oxide is represented by (Ln_{3-Y}A_{X})_{1-α}Mn₂O_{7-δ} (wherein Ln is La and/or Nd, A is Sr and/or Ca, α is the degree of A-site deficiency, and δ is the degree of oxygen deficiency). As a result, the PM oxidation temperature can be effectively decreased without the aid of a precious metal such as Pt. Further, application of the layered complex oxide enables a DPF having good reduction performance, or an oxidation catalyst, a three-way catalyst or a nitrogen oxide reduction catalyst having good catalytic performance.

### Brief Description of Drawings

Fig. 1 is a graph illustrating the results of X-ray diffraction analyses on layered complex oxides of inventive and comparative examples.
Fig. 2 is a graph illustrating the PM oxidation performances of the layered complex oxides of the inventive and comparative examples in a comparable manner, as measured by thermo gravimetry-differential thermal analysis.

### Description of Embodiments

Hereinafter, a layered complex oxide of the present invention will be described in more detail, as well as the structures of an oxidation catalyst, a DPF, a three-way catalyst and a nitrogen oxides reduction catalyst, each of which includes the layered complex oxide.

As described above, the composition of the layered complex oxide of the present invention is represented by the following Formula (1):

(Ln_{3-X}A_{X})_{1-α}Mn₂O_{7-δ} (1)

, wherein Ln is La and/or Nd, A is Sr and/or Ca, α is the degree of A-site deficiency, and δ is the degree of oxygen deficiency.

The layered complex oxide of the present invention is obtained by imparting deficiency at the so-called A-site to a layered perovskite complex oxide of the Ruddlesden-Popper type that is generally represented by the composition formula A₃B₂O₇.

Such A-site deficiency causes structural relaxation. That is, atomic-level vacancies that are introduced to the layered perovskite structure function in an effective way so as to help absorption/desorption of oxygen atoms on the material surface and in the lattice of the layered perovskite structure, which eventually decrease the combustion onset temperature.

As a result, the layered complex oxide of the present invention can increase oxidation rate, improve oxidation performance and decrease oxidation temperature of substances, typically PM.

In Formula (1), Ln may be either or both of La (lanthanum) and Nd (neodymium).

Further, A may be either or both of Sr (strontium) and Ca (calcium).

The degree of A-site deficiency α is not limited to a specific range, provided that it is neither 0 nor 1 or more, and is desirably in the range of 0.02 to 0.2 so as to further improve the above-described effects caused by the A-site deficiency.

As used herein, the term deficiency means a gap from the stoichiometric composition A₃B₂O₇ (α = 0), and the value α represents the degree of deficiency, i.e. the degree of the composition gap.

X may be any value in the range of more than 0 to less than 3, while it is particularly desirable that X is in the range of 0.5 to 1.8, more preferably in the range of 0.1 to 1.5, so as to improve the activity as a catalyst.

The amount of oxygen in such complex oxides containing a transition metal element changes thermodynamically depending on the temperature and surrounding gas atmosphere, i.e. according to oxygen deficiency caused by oxygen desorption. If such oxides are used as catalysts, the degree of oxygen deficiency δ is preferably less than 1.4, more preferably 1 or less.

The layered complex oxide of the present invention easily causes oxygen absorption/desorption on its surface and in its lattice and has high oxygen ion conductivity, which results in high oxidation performance, particularly PM oxidation performance. The layered complex oxide can therefore be used for various materials and catalysts that require such functions.

To be more specific, it can be used for PM oxidation catalysts due to the high PM oxidation performance, for three-way catalysts due to the high oxidation performance of hydrocarbons (HCs) and carbon monoxide (CO), for NO_{X} degradation catalysts due to having an NO_{X} reduction property, which the inventive oxide also has, and for electrode catalysts of fuel cells or photocatalysts due to the high oxygen ion conductivity.

Normally, the layered complex oxide of the present invention can be prepared by a solid-phase method.

Specifically, preparation can be conducted by setting a desired composition that satisfies the above formula (1), weighing lanthanum oxide (La₂O₃), neodymium oxide (Nd₂O₃), strontium carbonate (SrCO₃), calcium carbonate (CaCO₃). manganese oxide (Mn₂O₃) and the like so as to be of the desired composition, pre-calcining the mixture at approximately 1200°C for approximately 24 hours after mixing them, and calcining it at 1450°C for approximately 20 hours after mixing it again.

The oxidation catalyst of the present invention contains the above-described layered complex oxide of the invention, and exhibits high oxidation performance.

Specifically, it exhibits high oxidation performance of PM such as smoke and soot, and is capable of oxidizing and reducing PM at a temperature of typically 270°C or more without the aid of a precious metal such as Pt.

While the oxidation catalyst of the present invention contains the layered complex oxide as an essential ingredient, it may also contain various other ingredients. For example, inorganic refractory base materials such as alumina, ceria (CeO₂) and zirconia (ZrO₂), which can contribute to improving the specific surface area, and porous materials having uniform micropores such as zeolite may be included. Also, platinum (Pt), palladium (Pd), rhodium (Rh) and other precious metals may be included.

If the oxidation catalyst of the invention is used for internal-combustion engines, a monolithic support, such as monolithic honeycomb support, is preferably coated with the oxidation catalyst of the present invention.

This monolithic support may be cordierite, silicon carbide (SiC) or another ceramics support, or a metal support, such as stainless steel, any of which is equally preferred.

The diesel particulate filter (DPF) of the present invention includes the oxidation catalyst of the present invention and a monolithic support coated with the oxidation catalyst.

The oxidation catalyst of the DPF of the present invention is as described above.

The monolithic support may be the above-described honeycomb monolithic support. In particular, the so-called checkered honeycomb supports are preferred, which have a plurality of cells that are alternately plugged at a given end so that open ends and closed ends of the cells are in a checkered pattern.

Next, the three-way catalyst and nitrogen oxides (NO_{X}) reduction catalyst of the present invention will be described.

While the three-way catalyst and NO_{X} reduction catalyst each contain the above-described layered complex oxide of the present invention as an essential ingredient, they may also contain various other ingredients.

As with the oxidation catalyst, inorganic refractory base materials such as alumina, ceria (CeO₂) and zirconia (ZrO₂), which can contribute to improving the specific surface area, and porous materials having uniform micropores such as zeolite may be included. Also, platinum (Pt), palladium (Pd), rhodium (Rh) and other precious metals may be included.

Further, a monolithic support such as monolithic honeycomb support may be used.

### Examples

Hereinafter, the present invention will be described in more detail based on inventive examples and comparative examples. However, the present invention is not limited to those inventive examples.

### (Preparation of Layered Complex Oxide)

### (Inventive Example 1)

According to a charge composition (La_{1.5}Sr_{1.5})_{0.95}Mn₂O_{7-δ} (X= 1.5, α= 0.05), lanthanum oxide (La₂O₃), strontium carbonate (SrCO₃) and manganese oxide (Mn₂O₃), each in a powder form, were weighed and mixed in an agate mortar. Subsequently, the mixture was pre-calcined at 1200°C for 24 hours. The resulting substance was ground, mixed again, and then full-calcined at 1450°C for 20 hours. The resulting sintered body was ground. The layered complex oxide of Inventive Example 1 was thus obtained.

### (Inventive Example 2)

A layered complex oxide of Inventive Example 2 was obtained through the same process as in Inventive Example 1, except that the materials were weighed and mixed according to the charge composition (La_{1.5}Sr_{1.5})_{0.9}Mn₂O_{7-δ} (X= 1.5, α= 0.1).

### (Inventive Example 3)

A layered complex oxide of Inventive Example 3 was obtained through the same process as in Inventive Example 1, except that the materials were weighed and mixed according to the charge composition (La_{1.5}Sr_{1.5})_{0.98}Mn₂O_{7-δ} (X= 1.5, α= 0.02).

### (Inventive Example 4)

A layered complex oxide of Inventive Example 4 was obtained through the same process as in Inventive Example 1, except that the materials were weighed and mixed according to the charge composition (La_{1.5}Sr_{1.5})_{0.8}Mn₂O_{7-δ} (X= 1.5, α= 0.2).

### (Comparative Example 1)

According to a charge composition La_{1.5}Sr_{1.5}Mn₂O_{7-δ}, lanthanum oxide, strontium carbonate and manganese oxide, each in powder form, were weighed and mixed in an agate mortar. The mixture was then pre-calcined at 900°C for 24 hours. The resulting substance was ground, mixed again, and then further pre-calcined at 1050°C for 24 hours. The resulting powder was ground and full-calcined at 1600°C. The resulting sintered body was ground, and a layered complex oxide of Comparative Example 1 was thus obtained.

### (Comparative Example 2)

According to a charge composition La_{0.8}Sr_{0.2}MnO_{3-δ}, lanthanum oxide (La₂O₃), strontium carbonate (SrCO₃) and manganese oxide (Mn₂O₃), each in powder form, were weighed and mixed in an agate mortar. The mixture was then pre-calcined at 900°C for 24 hours. The resulting substance was ground, mixed again, and full-calcined at 1600°C for 18 hours. The resulting sintered body was ground. A layered complex oxide of Comparative Example 2 was thus obtained.

### (Comparative Example 3)

According to a charge composition (La_{0.5}Sr_{0.5})_{0.95}MnO_{3-δ}, lanthanum oxide (La₂O₃), strontium carbonate (SrCO₃) and manganese oxide (Mn₂O₃), each in powder form, were weighed and mixed in an agate mortar. The mixture was then pre-calcined at 900°C for 24 hours. The resulting substance was ground, mixed again, and full-calcined at 1600°C for 18 hours. The resulting sintered body was ground. A layered complex oxide of Comparative Example 3 was thus obtained.

### (X-ray Diffraction Analysis)

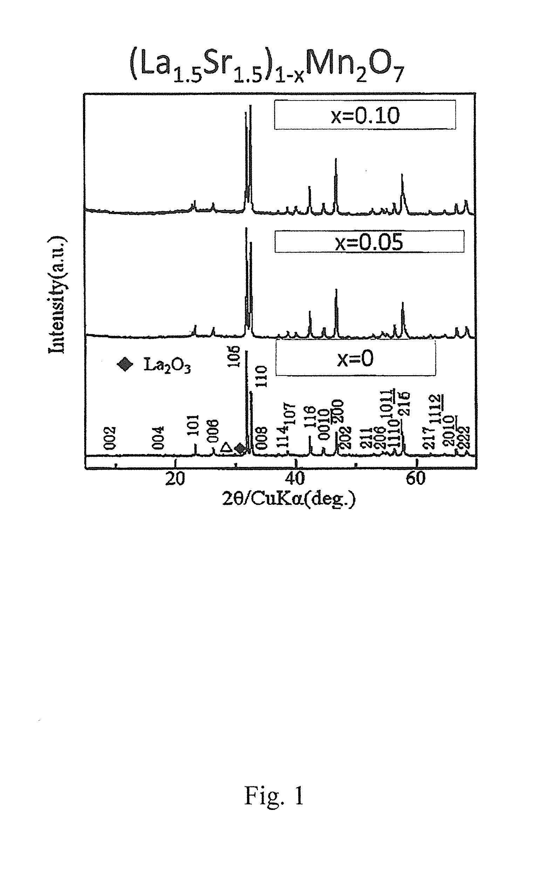

The layered complex oxides as prepared above were subjected to X-ray diffraction analysis with the following equipment and conditions. The results showed A-site deficiency in the layered complex oxides of Inventive Examples 1, 2 and Comparative Example 1. The results are shown in Fig. 1.
Analysis equipment: X-ray diffractometer (MXP18VAHF, MAC Science Corp.)
Voltage and Current: 40 kV, 300 mA
X-ray wavelength: Cu-Kα

### (Performance Evaluation)

The layered complex oxide (50 mg) of each of the Inventive Examples and Comparative Examples, and the same amount of PM collected from an automobile engine were weighed in the mass proportion of 1:1, and physically mixed in a mortar. A 10 mg fraction was weighed out from the mixture to be subjected to each analysis.

The sample of each example was subjected to TG-DTA (thermo gravimetry-differential thermal analysis) under the atmosphere where argon (Ar) gas or a mixed gas of 10%vol. oxygen (O₂) gas and valance nitrogen (N₂) gas was introduced. The analysis was carried out according to the following temperature schedule. The temperature was raised up to 240°C at 10°C/min and kept for 10 minutes under flowing Ar gas at 100 cc/min. Thereafter, the flowing gas was switched from Ar gas to the mixed gas of O₂/balance N₂, and the sample was kept at 240°C for 45 minutes under the flowing mixed gas at 100 cc/min. The same analyses were conducted with five more holding temperatures of 270°C, 300°C, 330°C, 360°C and 390°C.

Using a sample of pure PM, i.e. diesel particulate, with no layered complex oxide as a reference, the temperatures of the inventive and comparative examples were measured by the TG-DTA at the exothermic peak and at the initiation of weight loss. These measurements were used to evaluate the combustion onset temperatures. The result is shown in table 1.

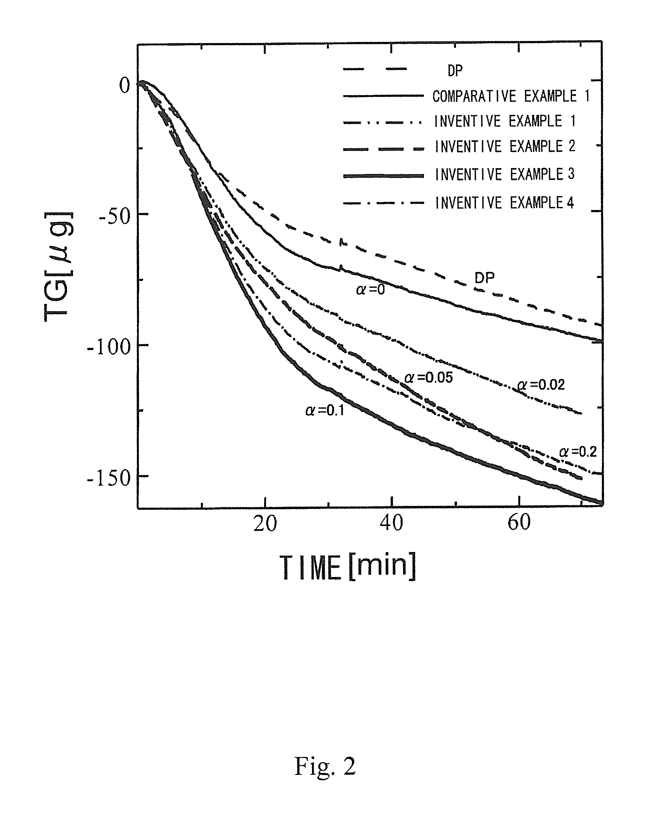

Further, the analysis result of the TG-DTA at 240°C is show in Fig. 2. In the figure, "DP" is an abbreviation of diesel particulate, i.e. represents the analysis result of the sample of pure PM with no layered complex oxide.

**Table 1**

| Category | Layered Complex Oxide | | Combustion Onset Temperature(°C) |
|---|---|---|---|
| | Composition Formula | α | |
| Inventive Example 1 | (La_{1.5}Sr_{1.5})_{0.95}Mn₂O_{7-δ} | 0.05 | 240-270 |
| Inventive Example 2 | (La_{1.5}Sr_{1.5})_{0.9}Mn₂O_{7-δ} | 0.1 | 240-270 |
| Inventive Example 3 | (La_{1.5}Sr_{1.5})_{0.98}Mn₂O_{7-δ} | 0.02 | 240-270 |
| Inventive Example 4 | (La_{1.5}Sr_{1.5})_{0.8}Mn₂O_{7-δ} | 0.2 | 240-270 |
| Comparative Example 1 | La_{1.5}Sr_{1.5}Mn₂O_{7-δ} | 0 | 300-330 |
| Comparative Example 2 | La_{0.8}Sr_{0.2}MnO_{3-δ} | 0 | 330-360 |
| Comparative Example 3 | (La_{0.5}Sr_{0.5})_{0.95}MnO_{3-δ} | 0.05 | 300-330 |

As seen in the results shown in table 1, in comparison to Comparative Example 1, which has no deficiency, Comparative Example 2, which is composed of the same elements but has a so-called ABO₃ structure, and Comparative Example 3, which is composed of the same elements but has a so-called ABO₃ structure with A-site deficiency, it was observed that the layered complex oxides of Inventive Examples 1 to 4, which have A-site deficiency, exhibit low PM combustion onset temperature and high catalyst activity, even though they do not contain any precious metal.

Further, as seen in Fig. 2, within the composition of the Inventive Examples, the degree of deficiency α is preferably in the range of 0.02 to 0.2, more preferably in the range of 0.05 to 0.2.

While the present invention is described with some embodiments and examples, it is not limited thereto, and changes and modifications may be made without departing from the gist of the present invention.

For example, in the above-described inventive examples, their PM combustion performances were evaluated. However, the layered complex oxide of the present invention also has three-way reduction property and NO_{X} reduction property. Further, it is obvious that there will be good results in terms of DPF because of the PM combustion performance noted above.

### Industrial Applicability

Because of its high oxygen ion conductivity, the layered complex oxide of the present invention is applicable to electrode catalysts of fuel cells and photocatalysts, as well as exhaust gas cleaning catalysts, which enables the provision of better fuel cells and photocatalysts.

## Claims

1. A layered complex oxide having a layered perovskite structure and having a composition represented by the following formula (1):
(Ln_{3-X}A_{X})_{1-α}Mn₂O_{7-δ} (1)
wherein Ln is La and/or Nd, A is Sr and/or Ca, α is a degree of A-site deficiency, δ is a degree of oxygen deficiency, and X, δ and α satisfy 0< X< 3, 0< α< 1 and δ< 1.4.

2. The layered complex oxide according to claim 1, wherein the degree of A-site deficiency α of formula (1) is 0.02 to 0.2.

3. An oxidation catalyst containing the layered complex oxide according to claim 1 or 2.

4. A diesel particulate filter, comprising: the oxidation catalyst according to claim 3, and a monolithic support coated with the oxidation catalyst.

5. A three-way catalyst containing the layered complex oxide according to claim 1 or 2.

6. A nitrogen oxides reduction catalyst containing the layered complex oxide according to claim 1 or 2.

## Amended claims

### Amended claims under Art. 19.1 PCT

**1.** An oxidation catalyst containing a layered complex oxide that has a layered perovskite structure and has a composition represented by the following formula (1):
(Ln_{3-X}A_{X})_{1-α}Mn₂O_{7-δ} (1)
wherein Ln is La and/or Nd, A is Sr and/or Ca, α is a degree of A-site deficiency, δ is a degree of oxygen deficiency, and α, δ and X satisfy 0< X< 3, 0< α< 1 and δ< 1.4.

**2.** A diesel particulate filter, comprising: the oxidation catalyst according to claim 3 or 7, and a monolithic support coated with the oxidation catalyst.

**3.** A three-way catalyst containing a layered complex oxide that has a layered perovskite structure and has a composition represented by the following formula (1):
(Ln_{3-X}A_{X})_{1-α}Mn₂O_{7-δ} (1)
wherein Ln is La and/or Nd, A is Sr and/or Ca, α is degree of A-site deficiency, δ is degree of oxygen deficiency, and α, δ and X satisfy 0< X< 3, 0< α< 1 and δ< 1.4.

**4.** A nitrogen oxides reduction catalyst containing a layered complex oxide that has a layered perovskite structure and has a composition represented by the following formula (1):
(Ln_{3-X}A_{X})_{1-α}Mn₂O_{7-δ} (1)
wherein Ln is La and/or Nd, A is Sr and/or Ca, α is degree of A-site deficiency, δ is degree of oxygen deficiency, and α, δ and X satisfy 0< X< 3, 0< α< 1 and δ< 1.4.

**5.** The oxidation catalyst according to claim 3, wherein the degree of A-site deficiency α of Formula (1) is 0.02 to 0.2.

**6.** The three-way catalyst according to claim 5, wherein the degree of A-site deficiency α of Formula (1) is 0.02 to 0.2.

**7.** The nitrogen oxides reduction catalyst according to claim 6, wherein the degree of A-site deficiency α of Formula (1) is 0.02 to 0.2.
